# EUROPÄISCHE PATENTSCHRIFT

(11) **EP 0 843 693 B1**
(45) Veröffentlichungstag und Bekanntmachung des Hinweises auf die Patenterteilung: **17.05.2000**
(21) Anmeldenummer: 96927647.6
(22) Anmeldetag: 01.08.1996
(51) Int. Cl.: C08G 18/36, C08G 18/10, C08G 18/16

(54) **POLYURETHAN-PREPOLYMER MIT NCO-GRUPPEN**
POLYURETHANE PREPOLYMER CONTAINING NCO GROUPS
PREPOLYMERE DE POLYURETHANE COMPORTANT DES GROUPES NCO

(30) Priorität: 10.08.1995 DE 19529406
(43) Veröffentlichungstag der Anmeldung: 27.05.1998
(73) Patentinhaber: Henkel Kommanditgesellschaft auf Aktien, 40589 Düsseldorf-Holthausen (DE)
(72) Erfinder: KLUTH, Hermann, D-40595 Düsseldorf (DE); KLAUCK, Wolfgang, D-40670 Meerbusch (DE); KLEIN, Johann Dr., 40593 Düsseldorf (DE); HÜBNER, Wilfried, D-40764 Langenfeld (DE)
(86) Internationale Anmeldenummer: EP9603384
(87) Internationale Veröffentlichungsnummer: WO9706196

(56) Entgegenhaltungen:
- EP-A- 0 107 402
- EP-A- 0 256 355
- EP-A- 0 603 597
- DE-A- 4 128 649
- DE-A- 4 341 264
- US-A- 3 045 034
- DATABASE WPI Week 7405 Derwent Publications Ltd., London, GB; AN 07931V XP002019070 "ACETONATE ACETYL ELASTOMER FORMATE LITHIUM POLYUREA SODIUM SOLUTION STABILISED" & JP,A,48 012 347 (KAO SOAP) , 26.September 1975

## Beschreibung

Die Erfindung betrifft ein feuchtigkeitshärtendes Polyurethan-Prepolymer aus oleochemischen Polyolen und Polyisocyanaten. Die Erfindung betrifft ferner die Verwendung dieses Prepolymeren in feuchtigkeitshärtenden Klebstoffen und Schaumstoffen, insbesondere in solchen Schaumstoffen, die mit unter Druck verflüssigten Treibgasen aus Einweg-Druckbehältern hergestellt werden.

Derartige Polyurethan-Prepolymere sind bekannt. So werden in der EP 125 579 die oleochemischen Polyole aus epoxidierten Triglyceriden durch Umsetzung mit niedermolekularen Monoalkoholen erhalten, z.B. durch Umsetzung von epoxidiertem Sojaöl mit Methanol oder Ethanol. Diese Ringöffnungsreaktion wird durch saure Katalysatoren beschleunigt, die nach Beendigung der Reaktion mit einem basischen Stoff neutralisiert werden, vorzugsweise mit einem Amin. Zusammen mit Polyisocyanaten ergeben diese oleochemischen Polyole NCO-Prepolymere mit einer beachtlichen, aber nicht immer ausreichenden Lagerstabilität, wenn man bekannte tertiäre Amine als Beschleuniger für die Reaktion der NCO-Gruppen mit Wasser zusetzt.

Entsprechende Polyurethan-Prepolymere werden in der EP 36 26 223 beschrieben. Die dort eingesetzten Polyole sind vorzugsweise Ringöffnungsprodukte von epoxidierten Ölen mit Monoalkoholen, wobei nun allerdings die Epoxidgruppen vollständig umgesetzt werden. Außerdem wird das erhaltene Triglycerid mit sekundären OH-Gruppen und OR-Gruppen zusätzlich mit überschüssigem Monoalkohol umgesetzt. Bei dieser Umesterung entsteht eine Mischung von Partialglyceriden mit nicht umgesetztem Triglycerid. Auch diese Polyole werden in Gegenwart von Säurekatalysatoren hergestellt. Der Katalysator wird zum Schluß ebenfalls mit einem Amin neutralisiert. Auch diese oleochemischen Polyole ergeben Polyurethan-Prepolymere mit einer unzureichenden Lagerstabilität, und zwar insbesondere dann, wenn die üblichen Katalysatoren für die Feuchtigkeitshärtung in relativ hoher Konzentration vorliegen.

Auch Polyetherpolyole, die durch Anlagerung von Alkylenoxiden an niedermolekulare Diole oder Triole in Gegenwart von alkalischen Verbindungen erhalten werden, ergeben nach Umsetzung mit Polyisocyanaten feuchtigkeitshärtende Polyurethan-Prepolymere mit beschränkter Lagerstabilität. Das gilt z.B. für Polyole aus Propylenoxid und/oder Ethylenoxid und Glycerin bzw. Trimethylolpropan in Gegenwart von NaOH, KOH, MeONa und MeOK bei Konzentrationen von mehr als 10 ppm Metallgehalt. Um eine zufriedenstellende Lagerstabilität mit solchen Polyolen zu bekommen, wird daher der Alkaligehalt solcher Polyole durch zusätzliche Reinigungsmaßnahmen auf Konzentrationen von ca. 5 ppm Na oder K reduziert.

Es besteht daher ein Bedarf an Polyurethan-Polymeren mit verbesserter Lagerstabilität bei sonst möglichst unveränderten Herstellungs- und Gebrauchseigenschaften.

Die erfindungsgemäße Lösung ist den Patentansprüchen zu entnehmen. Sie basiert im wesentlichen auf der Verwendung von basischen Lithium-Verbindungen bei der Herstellung von Polyolen, insbesondere oleochemischen Polyester-Polyolen.

Das erfindungsgemäße Polyurethan-Prepolymer mit NCO-Gruppen aus oleochemischen Polyolen und Polyisocyanaten ist also dadurch gekennzeichnet, daß es 0.35 bis 14 ppm an Lithium und 0,1 bis 2,0 Gew.-% eines tertiären Amins zur Beschleunigung der Feuchtigkeitshärtung enthält, sowie frei von Na, K und sonstigen Aminen, insbesondere deren Salzen mit starken Säuren ist.

Zur Beschleunigung der Reaktion von Wasser mit NCO-Gruppen kommen vor allem N-substituierte Morpholine in Frage. Konkret seien genannt: 2.2'-Dimorpholinodiethylether, N-Ethylmorpholin, 2.2-Bis-(Dimethylaminodiethyl)ether oder Mischungen der genannten Verbindungen. Bevorzugt wird 2.2'-Dimorpholinodiethylether (DMDEE) eingesetzt. Diese Katalysatoren eignen sich besonders, da sie vor allem die Aushärtungsreaktion katalysieren, weniger dagegen die Polymerisation der NCO-Gruppen (Trimerisierung) oder die Urethanbildung. Die Katalysatoren werden in einer Konzentration von 0,1 bis 2,0, vorzugsweise 0,2 bis 1,2, besonders bevorzugt 0,5 bis 1,0 Gew.-%, bezogen auf das Prepolymer insgesamt, eingesetzt. Sie werden im Regelfall dem Polyol oder dem Polyisocyanat schon vor der Prepolymerisierung zugegeben.

Das Lithium wird als basische Lithium-Verbindung eingesetzt. Vorzugsweise sind darunter Hydroxide und Alkoholate zu verstehen. Es können aber auch Verbindungen verwendet werden wie Lithiumacetat, Lithiumoxide und Li-Metall. Sie werden in einer Konzentration von 0,1 bis zu 4,0, vorzugsweise 0,5 bis 2,0 mmol/kg Polyol eingesetzt. Das entspricht einer Konzentration von 0,35 bis zu 14, vorzugsweise von 1,75 bis 7,0 ppm Lithium in dem Polyurethan-Prepolymeren. Die Lithiumverbindung kann als basischer Umesterungskatalysator vor oder während der Umesterung dem Reaktionsgemisch zugesetzt werden. Es ist aber auch möglich, nach einer sauer katalysierten Umesterung die Säure mit der Lithiumverbindung zu neutralisieren.

Bei den vorzugsweise verwendeten oleochemischen Polyolen handelt es sich um Polyole mit Estergruppen, die sich von natürlichen Fetten und Ölen ableiten. Sie enthalten also Bausteine von Fettsäuren und Fettalkoholen. Ausgangsstoffe für die oleochemischen Polyole der erfindungsgemäßen Polyurethan-Prepolymere sind Fette und/oder Öle pflanzlicher und/oder tierischer Herkunft mit vorzugsweise ungesättigten Fettsäureresten. Konkrete Beispiele sind Rizinusöl, Rüböl und Sojaöl. Es kommen aber auch in Frage: Rindertalg, Palmöl, Erdnußöl, Sonnenblumenöl und Fischöl. Diese Ausgangsfette werden vorzugsweise epoxidiert und umgeestert. Von den epoxidierten Triglyceriden wird vorzugsweise epoxidiertes Sojaöl verwendet. Die Epoxidation sowie die Umsetzung mit Alkoholen bzw. Carbonsäuren ist bekannt (siehe z.B. EP 125 579 und DE 36 26 223). Dabei entstehen Polyole, die neben den Ester-Gruppen auch noch Ether-Gruppen enthalten.

Zur Herstellung der erfindungsgemäßen Polyesterpolyole werden neben den Fetten und Ölen auch noch mehrwertige Alkohole mit einer Funktionalität von 2 bis 4 benötigt. Sie haben ein Molekulargewicht von weniger als 400. Geeignete mehrwertige Alkohole sind z.B. Glykol, Glycerin, Pentaerythrit und Trimethylolpropan. Neben diesen mehrwertigen Alkoholen können auch noch Dicarbonsäuren in einer untergeordneten Menge mitverwendet werden. Konkrete Beispiele sind Adipinsäure, Phthalsäure, Isophthalsäure, Terephthalsäure, Glutarsäure, Bernsteinsäure, Azelainsäure, Dimerfettsäure sowie deren Gemische.

Die Esterbildung erfolgt unter an sich bekannten Bedingungen.

Die erfindungsgemäß zu verwendenden oleochemischen Polyole haben nach der Umesterung eine OH-Zahl von 100 bis 400, vorzugsweise von 150 bis 350.

Neben diesen oleochemischen Polyolen sind die Polyisocyanate der zweite wichtige Baustein für die erfindungsgemäßen Polyurethan-Prepolymeren.

Besonders geeigente Isocyanate sind aromatische Polyisocyanate auf Basis von MDI (Methylenbisdiphenylisocyanat oder Diphenylmethan-4,4'-diisocyanat). Insbesondere sind Mischungen von MDI mit höhermolekularen Homologen und einer durchschnittlichen Isocyanat-Funktionalität von 2,3 bis 2,8 brauchbar. Als weitere aromatische Isocyanate sind zu nennen: NDI und TDI. Ferner sind auch cycloaliphatische Isocyanate wie IPDI, H12-MDI und aliphatische Diisocyanate wie Tetramethylendiisocyanat und Hexamethylendiisocyanat geeignet.

Das oleochemische Polyol und das Polyisocyanat werden in einem Mengenverhältnis eingesetzt, das dem Molverhältnis von OH : Isocyanat-Gruppen von 1 : 3 bis 1 : 11, insbesondere von 1 : 4 bis 1 : 6 entspricht.

Die Umsetzung zwischen dem oleochemischen Polyol und dem Polyisocyanat erfolgt üblicherweise im Temperaturbereich zwischen 0 und 100 °C, vorzugsweise zwischen 15 und 50 °C. Katalysatoren für die Reaktion der Isocyanatgruppen mit den OH-Gruppen sind im Regelfall nicht notwendig. Es können jedoch zur Steuerung der Reaktion auch Katalysatoren in minimalen Mengen zugesetzt werden, die die Reaktion der Isocyanatgruppe mit der OH-Gruppe beschleunigen, nicht jedoch deren Trimerisierung. Konkrete Beispiele sind Dimorpholinodiethylether, Bis(dimethylaminoethyl)ether, Dabco X-DM (Fa. Air Products) sowie N-Ethylmorpholin. Unter Umständen können aber auch andere Katalysatoren in Frage kommen, wenn sie die Isocyanatgruppen während der Lagerung nicht trimerisieren, z.B. N-substituierte Morpholine sowie deren Mischungen mit Propylenoxid-Addukten des Triethanolamins, sowie die bekannten Metallkatalysatoren, insbesondere des Zinns.

Das Polyurethan-Prepolymer hat eine NCO-Funktionlität von 2 bis 5, insbesondere von 2,5 bis 4,2 und einen NCO-Gehalt von 8 bis 30 Gew.-%, insbesondere von 10 bis 23, bezogen auf das Prepolymere sowie eine Viskosität von 5 bis 200, insbesondere von 10 bis 100 Pas bei 25 °C nach DIN 53015.

Zur Herstellung von Polyurethan-Schäumen ist neben dem Polyurethan-Prepolymeren noch mindestens ein Amin-Katalysator für die Reaktion der Isocyanat-Gruppe mit den OH-Gruppen (incl. Wasser), mindestens ein Treibmittel und mindestens ein Schaumstabilisator notwendig. Darüber hinaus können noch weitere Additive zugesetzt werden, z.B. Lösungsmittel, Flammschutzmittel, Weichmacher, Zellregler, Emulgatoren, Fungizide, Füllstoffe, Pigmente und Alterungsschutzmittel. Die Zusammensetzung ist eine Lösung oder Emulsion.

Als Treibmittel wird vorzugsweise 1,1,1,2-Tetrafluorethan, 1,1-Difluorethan und Dimethylether eingesetzt. Es können aber auch Kohlendioxid, Distickstoffoxid, n-Propan, n-Butan und Isobutan verwendet werden. Als Treib- und Lösungsmittel dienen zweckmäßigerweise: chlorfreie Fluorkohlenwasserstoffe mit Siedepunkten von -40 bis +60 °C Propan/Butan-Gemische und Dimethylether oder deren Mischungen.

Weiterhin enthält die schaumbildende Zusammensetzung zusätzlich Stabilisatoren. Als "Stabilisatoren" im Sinne dieser Erfindung sind einerseits Stabilisatoren zu verstehen, die eine Viskositätsstabilität der Zusammensetzung während der Herstellung, Lagerung bzw. Applikation bewirken. Hierfür sind z. B. monofunktionelle Carbonsäurechloride, monofunktionelle hochreaktive Isocyanate, aber auch nicht-korrosive anorganische Säuren geeignet. Beispielhaft seien genannt Benzoylchlorid, Toluolsulfonylisocyanat, Phosphorsäure oder phosphorige Säure.

Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des Schaumkunststoffes. Wenn das Polyurethanprepolymer in der Hauptkette aus Polyetherbausteinen aufgebaut ist, sind hauptsächlich Antioxidantien, gegebenenfalls in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile der Hauptkette des Polyurethanprepolymers aus Polyesterbausteinen, werden vorzugsweise Hydrolyse-Stabilisatoren, z. B. vom Carbodiimid-Typ, eingesetzt.

Als Schaumstabilisator werden vorzugsweise Siloxan-Oxyalkylen-Copolymere, z.B. Tegostab B 8404 (Fa. Goldschmidt), Dabco DC-190 oder Dabco DC-193 (Fa. Air Products) eingesetzt.

Die schaumbildende Zusammensetzung setzt sich quantitativ vorzugsweise folgendermaßen zusammen:
- 50 bis 90, vorzugsweise 60 bis 85 Gew.-% an Isocyanat-Prepolymeren,
- 0,1 bis 2,0, vorzugsweise 0,2 bis 1,2 an Katalysatoren,
- 5 bis 35, vorzugsweise 10 bis 25 an Treibmittel und
- 0,1 bis 5,0, vorzugsweise 0,5 bis 3,0 an Schaumstabilisator. Von den fakultativen Additiven kann das Flammschutzmittel in einer Menge von 5 bis 50, vorzugsweise von 10 bis 30 zugesetzt werden. Die übrigen fakultativen Additive können in einer Menge von 0,1 bis 3,0 zugesetzt werden, insbesondere von 0,2 bis 1,5. Bei den Angaben handelt es sich um Gew.-%, bezogen auf die gesamte Zusammensetzung.

Die schaumbildenden Zusammensetzungen ermöglichen die Herstellung eines Einkomponenten-Kunststoffschaumes aus einem Druckgefäß, der wie üblich mit Umgebungsfeuchtigkeit aushärtet. Aber auch ein Zweikomponenten-Kunststoffschaum ist ohne weiteres möglich, wenn der Zusammensetzung ein Polyol in möglicht äquivalenten Mengen oder in einem geringen Unterschuß zugesetzt wird. Bei dem Polyol handelt es sich um üblicherweise eingesetzte Stoffe mit 2 bis 6 C-Atomen und 2 oder 3, vorzugsweise primären OH-Gruppen.

Der so hergestellte Kunststoffschaum eignet sich insbesondere zum Dämmen, Montieren und Dichten im Bauwesen, insbesondere vor Ort.

Das erfindungsgemäße Polyurethan-Prepolymer eignet sich auch zur Herstellung von Klebstoffen. Sie bestehen im wesentlichen aus dem Polyurethan-Prepolymer und dem Amin-Katalysator. Treibmittel und Schaumstabilisatoren entfallen.

Das erfindungsgemäße Polyurethan-Prepolymer zeichnet sich durch eine hohe Lagerstabilität aus. Unter Lagerstabilität wird hierbei insbesondere der Viskositäts-Konstanz bei Lagerungstemperaturen von 20 bis 50 °C verstanden. Um die Lagerstabilitäten verschiedener Systeme vergleichen zu können, wird die Viskosität der Polymeren nach der Prepolymerisation und nach verschiedenen Lagerungszeiten bei 20 °C (Raumtemperatur) bzw. bei 50 °C gemessen. Die Viskositätsmessung selbst wird bei 25 °C mit einem Brookfield-Viskosimeter vom Typ RVT vorgenommen. Wegen der unterschiedlichen Anfangsviskositäten wurde als kennzeichnende Größe für die Lagerstabilität nicht der absolute Viskositätsanstieg, sondern der auf die Startviskosität bezogene prozentuale Anstieg pro Monat Lagerung (= 30 Tage) verwendet. Diese Rechengröße wird als Viskositätsanstieg bezeichnet. Sie wird bei den beschriebenen Polyurethan-Prepolymeren ausschließlich in Gegenwart von Lösungsmitteln bestimmt, da die bevorzugte Anwendung solcher Prepolymeren Highsolid-systeme mit Lösemittelgehalten von 5 bis 30 % sind. Als Lösemittel wird "FCKW-113" verwendet. Es können jedoch auch beliebige andere Lösemittel verwendet werden, sofern sie keine NCO-reaktiven Gruppen enthalten, z.B. Dimethoxymethan, Methylacetat, Pentan, Dimethylcarbonat usw..

Die Lagerstabilität des Polyurethan-Prepolymeren wird nicht nur durch die Art und Herstellung des oleochemischen Polyols bestimmt, sondern auch noch durch andere Faktoren: Art, Reaktivität und Verunreinigungen des Di- oder Polyisocyanates, Art und Konzentration der zur Beschleunigung der NCO/OH-Reaktion bei der Polyol-Isocyanat-Addition zugesetzten Katalysatoren, Art und Konzentration des für die NCO/H₂O-Reaktion zugesetzten Beschleunigers sowie auch durch die Temperaturführung während der Prepolymerisation. Von zusätzlichen aber untergeordnetem Einfluß auf die Lagerstabilität sind weiterhin auch noch die Zusätze von Lösemitteln, Flammschutzmitteln und Weichmachern.

Die erfindungsgmäße Verwendung von basischen Lithiumverbindungen als Katalysator verlängert die Lagerstabilität um ein Mehrfaches. Die Erfindung wird nun anhand von Beispielen im einzelnen näher erläutert.

### Beispiele

### 1. Herstellung der oleochemischen Polyole E1 bis E3 (Umesterungspolyole)

Rizinusöl, Glycerin (99,5 %) und Lithiumhydroxid werden in einem trockenen Reaktor vorgelegt und unter Stickstoff 6 bis 8 Stunden bei 240 °C gerührt. Nach dem Abkühlen auf 120 °C wird Vakuum (ca. 15 mbar) angelegt und 1 Stunde bei dieser Temperatur getrocknet. Gewichtsanteile der Ausgangsstoffe sowie die Eigenschaften der Umesterungspolyole sind der Tabelle 1 zu entnehmen:

Die Herstellung weiterer Umesterungspolyole (E5 bis E7) aus Gemischen von a) Rizinusöl, b) Rüböl, c) Glycerin und ggf. d) der Dicarbonsäure oder deren Anhydrid erfolgt analog der angegebenen Verfahrensvorschrift. Soweit abweichende Mengen von Lithiumhydroxid oder abweichende Kondensationsbedingungen verwendet wurden, ist dies bei den nachfolgend beschriebenen Polyolen vermerkt (s. Tabelle 3).

### 2. Herstellung von Prepolymer-Lösungen

Aus den beschriebenen erfindungsgemäßen Polyolen wird durch Zusatz von Weichmachern, Flammschutzmitteln, Tensiden, Katalysatoren, Polyisocyanat und einem leicht flüchtigen Lösemittel mit einem Siedepunkt von -40 °C bis +60 °C bei 1013 mbar eine Lösung eines NCO-Prepolymeren hergestellt. Die Polyaddition wird (nach dem Vermischen aller Komponenten bei Raumtemperatur) bei Temperaturen von +10 °C bis +50 °C durchgeführt.

24 Stunden nach der Mischungsherstellung wird die Viskosität der Prepolymer-Lösung gemessen, dieser Wert wird nachfolgend als Startviskosität bezeichnet. Der relative Viskositätsanstieg wird aus den nach Lagerung bei 20 und 50 °C ermittelten absoluten Viskositäten errechnet.

Die Zusammensetzungen der erfindungsgemäßen Lösungen (in Gewichts-Teilen) gehen aus der Tabelle 2 und 3 hervor, daneben sind die nicht erfindungsgemäßen Beispiele V1, V2, V3 und V4 aufgeführt (Tabelle 4).

Die Ergebnisse der Viskositäts-Untersuchungen zeigen, daß der Viskositätsanstieg um ein Vielfaches verringert wird, wenn LiOH anstelle von KOH als Katalysator für die Umesterung verwendet wird.

**Tabelle 1**

| Oleopolyol-Nr. | E1 | E2 | E3 |
|---|---|---|---|
| Ausgangsrohstoffe | | | |
| Rizinusöl 1 F | 900 | 950 | 980 |
| Glycerin | 100 | 50 | 20 |
| LiOH · 1H₂O | 0,07 | 0,07 | 0,07 |

| Polyol-Daten: | | | |
|---|---|---|---|
| OH-Zahl, mgKOH/g | 320 | 241 | 197 |
| Lithium-Gehalt, ppm | 11,5 | 11,5 | 11,5 |
| mmol/kg | 1,65 | 1,65 | 1,65 |
| Wassergehalt % | <0,2 | <0,2 | <0,2 |

**Tabelle 2**

| Beispiel Nr.: | 1 | 2 | 3 | 4 |
|---|---|---|---|---|
| Polyol OHZ | 320 | 241 | 197 | 320 |
| Alkalimetall | Li | Li | Li | Li |
| Gehalt, ppm | 11,5 | 11,5 | 11,5 | 11,5 |
| Gehalt, mmol/kg | 1,65 | 1,65 | 1,65 | 1,65 |
| Oleopolyol E1 | 40,86 | | | 40,52 |
| Oleopolyol E2 | | 44,8 | | |
| Oleopolyol E3 | | | 48,13 | |
| TMCP | 54,32 | 50,28 | 46,95 | 53,28 |
| Silikon-Tensid | 3,8 | 3,96 | 3,96 | 3,85 |
| DMDEE | 1,02 | 0,96 | 0,96 | 2,35 |
| OH-Zahl PC | 130,8 | 108 | 94,8 | 129,7 |

| NCO-Prepolymer: | | | | |
|---|---|---|---|---|
| Polyol-Compound | 32,4 | 36,27 | 38,86 | 32,4 |
| Caradate 30 | 47,6 | 43,73 | 41,14 | 47,6 |
| FCKW-113 | 20 | 20 | 20 | 20 |
| Prepolymer-Lösung: | 100 | 100 | 100 | 100 |
| | | | | |

| Daten der Prepolymeren: | | | | |
|---|---|---|---|---|
| NCO/OH-Verhältnis | 4,65 | 4,62 | 4,62 | 4,69 |
| DMDEE % | 0,33 | 0,35 | 0,37 | 0,76 |
| Startviskosität mPas | 1830 | 1400 | 1510 | 1880 |
| | | | | |

| Viskositätsanstieg | | | | |
|---|---|---|---|---|
| bei 20 °C in %/Monat | 10,6 | 8,2 | 7,9 | 14,7 |
| bei 50 °C in %/Monat | 102 | 67 | 58 | 138 |

**Tabelle 3**

| Polyol-Nr. | E5 | E6 | E7 |
|---|---|---|---|
| Rüböl | 33 | 40 | 0 |
| Rizinusöl | 53 | 50 | 91 |
| Glycerin*1PO | 14 | 10 | 9 |
| LiOH · 1H₂O | 0,007 | 0,007 | 0,007 |

| Polyol-Daten: | | | |
|---|---|---|---|
| OH-Zahl | 247 | 193 | 250 |
| Lithium mmol/kg | 1,65 | 1,65 | 1,65 |
| Polyol | 42,67 | 46,67 | 42,47 |
| TMCP | 48,92 | 44,92 | 49,12 |
| Silikon-Tensid | 3,82 | 3,82 | 3,82 |
| DMDEE | 0,93 | 0,93 | 0,93 |
| OHZ-PC | 109,4 | 93,5 | 110,2 |

| NCO-Prepolymer: | | | |
|---|---|---|---|
| Polyol-Compound (PC) | 36,57 | 39,75 | 36,42 |
| Caradate 30 | 44,68 | 41,5 | 44,83 |
| FCKW-113 | 18,75 | 18,75 | 18,75 |
| Prepolymer-Lösung | 100 | 100 | 100 |

| Daten der Prepolymeren: | | | |
|---|---|---|---|
| NCO/OH-Verhältnis | 4,8 | 4,8 | 4,8 |
| DMDEE, % | 0,40 | 0,43 | 0,39 |
| Startviskosität mPas, 25 °C | 950 | 850 | 1320 |

| Viskositätsanstieg | | | |
|---|---|---|---|
| bei 20 °C in %/Monat | | | |
| bei 50 °C in %/Monat | 40,1 | 45,3 | 42,5 |

**Tabelle 4**

| Vergleichsbeispiele (nicht erfindungsgemäß) | | | | |
|---|---|---|---|---|
| Beispiel Nr.: | V1 | V2 | V3 | V4 |
| Polyol OHZ | 180 | 180 | 150 | 320 |
| Alkalimetall | - | - | K | K |
| Gehalt, ppm | 0 | 0 | 15 | 15 |
| Gehalt, mmol/kg | 0 | 0 | 0,38 | 0,38 |
| Sojapolyol 180A | 48,93 | 48,5 | | |
| Aminopolyol | | | 66,4 | |
| Oleopolyol V4 | | | | 40,86 |
| TMCP | 46,32 | 45,3 | 30 | 54,32 |
| Silikon-Tensid | 3,82 | 3,85 | 3,6 | 3,80 |
| DMDEE | 0,93 | 2,35 | 0 | 1,02 |
| OH-Zahl PC | 88,1 | 87,3 | 99,6 | 130,8 |

| NCO-Prepolymer: | | | | |
|---|---|---|---|---|
| Polyol-Compound | 38 | 38 | 35,6 | 32,4 |
| Caradate 30 | 42 | 42 | 44,4 | 47,6 |
| FCKW-113 | 20 | 20 | 20 | 20,0 |
| Prepolymer-Lösung | 100,00 | 100,00 | 100,00 | 100,00 |

| Daten der Prepolymeren: | | | | |
|---|---|---|---|---|
| NCO/OH-Verhältnis | 5,19 | 5,24 | 5,18 | 5,25 |
| DMDEE % | 0,35 | 0,89 | 0 | 0,33 |
| Startviskosität mPas | 2130 | 2170 | 3160 | 2450 |

| Viskositätsanstieg | | | | |
|---|---|---|---|---|
| bei 20 °C in %/Monat | 25,1 | 43,4 | - | - |
| bei 50 °C in %/Monat | 309 | 480 | 223 | 241 |

### Anmerkungen zu den Tabellen:

- Rizinusöl 1 F: technisches Rizinusöl, OHZ: 165 ± 5
- Sojapolyol 180A:
   Oleochemisches Polyol, hergestellt aus epoxidiertem Sojaöl (mit 6,1 % Epoxid-Gehalt) durch Umsetzung mit Methanol.
   OH-Zahl: 180. Viskosität: ca. 4 000 mPas bei 25 °C.
   Epoxid-Sauerstoff: < 0,1 Gew.-%.
- Aminopolyol:
   Petrochemisches Polyol, hergestellt durch Propoxylierung von Triethanolamin.
   OH-Zahl: 150. Viskosität: 330 mPas bei 25 °C.
   Kalium-Gehalt: 15 ppm (berechnet als Metall).
- TMCP: Tris(2-chlorpropyl)phosphat.
- Silikon-Tensid: Siloxan-Oxyalkylen-Copolymer.
- DMDEE: 2,2'-Dimorpholinodiethylether.
- PC = Polyol-Compound
- Caradate 30: Polymer-MDI der Fa. Shell AG mit einer Funktionalität von 2,7 und einem NCO-Gehalt von 31,0 Gew.-%.
- FCKW-113: 1,1,2-Trichlor-1,2,2-Trifluorethan.
- Glycerin · 1 PO: Addukt aus 1 mol Glycerin und 1 mol Propylenoxid
- Oleopolyol V4: Polyol aus 900 Gew.-Teilen Rizinusöl 1 F und 100 Gew.-Teilen Glycerin, hergestellt durch Erhitzen in Gegenwart von KOH, 15 pp Kalium-Gehalt, OH-Zahl 320.

## Patentansprüche

1. Polyurethan-Prepolymer mit NCO-Gruppen aus Polyolen und Polyisocyanaten, dadurch gekennzeichnet, daß es 0,35-14 ppm Lithium und 0,1 bis 2,0 Gew.-% eines die Feuchtigkeitshärtung beschleunigenden tertiären Amins enthält und frei von Na, K und sonstigen Aminen ist.

2. Prepolymer nach Anspruch, dadurch gekennzeichnet, daß das Polyol oleochemisch ist.

3. Prepolymer nach Anspruch 1 oder 2, dadurch gekennzeichnet, daß das zur Herstellung verwendete Polyol durch Umesterung von Rizinusöl, Rüböl, Sojaöl und epoxidierten Sojaöl mit 2 bis 4 OH-Gruppen enthaltenden kurzkettigen Verbindungen mit einem Molekulargewicht von <400 hergestellt wurde und die OH-Zahl des Polyols nach der Umesterung 100 bis 400 beträgt.

4. Prepolymer nach Anspruch 1, 2 oder 3, dadurch gekennzeichnet, daß zur Herstellung des Polyols pro kg Polyol bis zu 4,0 mmol einer basischen Lithium-Verbindung, insbesondere Lithiumhydroxid vor der Umesterung zugesetzt wurde.

5. Prepolymer nach mindestens einem der Ansprüche 1 bis 4, dadurch gekennzeichnet, daß als Beschleuniger für die Feuchtigkeitshärtung 0,1 bis 2,0 Gew.-% 2,2'-Dimorpholinodiethylether (bezogen auf die Summe von NCO-Prepolymer, Weichmacher/Flammschutzmittel, Lösemittel/Treibmittel und sonstiger Additive) vor der Prepolymerisation eingesetzt wurde.

6. Prepolymer nach mindestens einem der Ansprüche 1 bis 5, dadurch gekennzeichnet, daß als Polyisocyanat Diphenylmethan-4,4'-diisocyanat in Form der technischen Mischungen des Polymer-MDI mit Funktionalitäten von 2,3 bis 2,8 eingesetzt wurde.

7. Verwendung des Prepolymeren nach mindestens einem der Ansprüche 1 bis 6 zur Herstellung von feuchtigkeitshärtbarem Klebstoff oder Schaumstoff.

8. Verwendung des Prepolymeren nach Anspruch 7 zur Herstellung von feuchtigkeitshärtenden Lösungen in Einweg-Druckbehältern, wobei als Lösemittel a) chlorfreie Fluorkohlenwasserstoffe mit Siedepunkten von -40 °C bis +60 °, b) Propan/Butan-Gemische, c) Dimethylether oder deren Mischungen eingesetzt werden.

## Claims

1. A polyurethane prepolymer containing NCO groups of polyols and polyisocyanates, characterized in that it contains 0.35 to 14 ppm of lithium and 0.1 to 2.0% by weight of a tertiary amine, which accelerates moisture curing, and is free from Na, K and other amines.

2. A prepolymer as claimed in claim 1, characterized in that the polyol is oleochemical.

3. A prepolymer as claimed in claim 1 or 2, characterized in that the polyol used for its production is obtained by transesterification of castor oil, rapeseed oil, soybean oil and epoxidized soybean oil with short-chain compounds containing 2 to 4 OH groups and having a molecular weight of <400 and in that the OH value of the polyol after transesterification is 100 to 400.

4. A prepolymer as claimed in claim 1, 2 or 3, characterized in that, to produce the polyol, up to 4.0 mmoles of a basic lithium compound, more particularly lithium hydroxide, per kg of polyol are added before the transesterification.

5. A prepolymer as claimed in at least one of claims · to 4, characterized in that 0.1 to 2.0% by weight of 2,2'-dimorpholinodiethyl ether (based on the sum of NCO prepolymer, plasticizer/flameproofing agent, solvent/blowing agent and other additives) are added before the prepolymerization to accelerate moisture curing.

6. A prepolymer as claimed in at least one of claims 1 to 5, characterized in that diphenylmethane-4,4'-diisocyanate in the form of technical mixtures of polymer MDI with functionalities of 2.3 to 2.8 is used as the polyisocyanate.

7. The use of the prepolymer claimed in at least one of claims 1 to 6 for the production of moisture-curing adhesives or foams.

8. The use of the prepolymer claimed in claim 7, for the production of moisture-curing solutions in non-reusable pressurized containers, the solvents used being a) chlorine-free fluorocarbons with boiling points of -40°C to +60°C, b) propane/butane mixtures and c) dimethyl ether or mixtures thereof.

## Revendications

1. Prépolymère de polyuréthane comportant des groupes NCO, à base de polyols et de polyisocyanates, caractérisé en ce qu'il renferme 0,35 à 14 ppm de lithium et 0,1 à 2,0 % en poids d'une amine tertiaire accélérant le durcissement à l'humidité, et est exempt de sodium, de potassium et d'autres amines.

2. Prépolymère selon la revendication 1, caractérisé en ce que le polyol est oléochimique.

3. Prépolymère selon la revendication 1 ou 2, caractérisé en ce que le polyol mis en oeuvre pour la production a été fabriqué par transestérification d'huile de ricin, d'huile de navette, d'huile de soja et d'huile de soja époxydée avec des composés à chaîne courte comportant 2 à 4 groupes OH et possédant un poids moléculaire < 400, et en ce que l'indice d'OH du polyol après la transestérification atteint 100 à 400.

4. Prépolymère selon la revendication 1, 2 ou 3, caractérisé en ce que l'on a ajouté avant la transestérification jusqu'à 4,0 mmol d'un composé de lithium basique, en particulier de l'hydroxyde de lithium, par kg de polyol pour la production du polyol.

5. Prépolymère selon au moins une des revendications 1 à 4, caractérisé en ce que l'on a mis en oeuvre avant la prépolymérisation, comme accélérateur pour le durcissement à l'humidité, 0,1 à 2,0 % en poids de 2,2'-dimorpholinodiéthyléther (par rapport à la somme du prépolymère comportant des groupes NCO, du plastifiant/agent pare-flammes, du solvant/agent propulseur et des autres additifs).

6. Prépolymère selon au moins une des revendications 1 à 5, caractérisé en ce que l'on a mis en oeuvre comme polyisocyanate, du diphénylméthane-4,4'-diisocyanate sous la forme de mélanges techniques du MDI polymère possédant une fonctionnalité de 2,3 à 2,8.

7. Utilisation du prépolymère selon au moins une des revendications 1 à 6, pour la production de colle ou de mousse durcissant à l'humidité.

8. Utilisation du prépolymère selon la revendication 7 pour la production de solutions durcissant à l'humidité dans des récipients sous pression à usage unique, en utilisant comme solvants, a) des hydrocarbures fluorés exempt de chlore présentant un point d'ébullition de -40 à 60 °C, b) des mélanges de propane et de butane et c) de l'éther diméthylique, ou des mélanges de ceux-ci.
